(19) Europäisches Patentamt
European Patent Office
Office européen des brevets

(11) **EP 4 039 394 B1**

(12) **EUROPEAN PATENT SPECIFICATION**

(45) Date of publication and mention of the grant of the patent:
**28.02.2024 Bulletin 2024/09**

(21) Application number: **20872746.1**

(22) Date of filing: **16.09.2020**

(51) International Patent Classification (IPC):
**B23K 1/00** *(2006.01)*     **B23K 1/19** *(2006.01)*
**B23K 1/20** *(2006.01)*     **C22C 21/02** *(2006.01)*
**B23K 35/28** *(2006.01)*     **B23K 35/02** *(2006.01)*
**B23K 101/14** *(2006.01)*    **B23K 103/10** *(2006.01)*

(52) Cooperative Patent Classification (CPC):
**B23K 35/286; B23K 1/0012; B23K 1/19;**
**B23K 1/20; B23K 35/0238; C22C 21/02;**
B23K 2101/14; B23K 2103/10

(86) International application number:
**PCT/JP2020/035086**

(87) International publication number:
**WO 2021/065513 (08.04.2021 Gazette 2021/14)**

(54) **ALUMINUM BRAZING SHEET AND METHOD FOR FLUX-FREE BRAZING OF ALUMINUM MEMBER**

ALUMINIUMLÖTBLECH UND VERFAHREN ZUM FLUSSFREIEN HARTLÖTEN EINES ALUMINIUMTEILS

FEUILLE DE BRASAGE D'ALUMINIUM ET PROCÉDÉ DE BRASAGE SANS FLUX D'ÉLÉMENT EN ALUMINIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2019 JP 2019183672**

(43) Date of publication of application:
**10.08.2022 Bulletin 2022/32**

(73) Proprietor: **MA Aluminum Corporation Tokyo, 105-8546 (JP)**

(72) Inventor: **UESUGI, Ryuji Susono-shi, Shizuoka 410-1127 (JP)**

(74) Representative: **Hoffmann Eitle Patent- und Rechtsanwälte PartmbB Arabellastraße 30 81925 München (DE)**

(56) References cited:
EP-A1- 2 803 442          EP-A1- 3 323 901
WO-A1-2013/105637      WO-A2-2011/034496
JP-A- S5 379 752          JP-A- 2013 505 135
JP-A- 2018 103 260       JP-A- 2019 013 981
JP-A- 2019 013 981       JP-B1- 6 726 370

**Description**

[Technical Field]

The present invention relates to an aluminum brazing sheet and a method for flux-free brazing of aluminum members in which brazing is performed in a non-oxidizing atmosphere without using a flux and without decompression.

[Background Art]

In flux-free brazing using Al-Si-based brazing materials, bonding can be performed when Mg in a brazing material having been melted to be active reduces and decompose the Al oxide film ($Al_2O_3$) on a surface of joint portions (for example, refer to Patent Literature 1 and 2). Furthermore, as for closed surface-bonding joints or the like which are not easily affected by the atmosphere, through a decomposition action of the oxide film due to Mg, good joining states can be obtained with a j oint in which brazing sheets having a brazing material are combined or a joint in which a brazing sheet and a member to be joined (bare material) which does not have a brazing material are combined.

Patent Literature 3 describes a flux free brazing method of an aluminum material wherein a brazing sheet cladded with an Al alloy brazing filler metal containing 3-13 mass% Si and 0.1-5.0 mass% Mg on one surface or both surfaces of an Al-made core material and the aluminum alloy member of a joining object member are assembled and brazed without using a flux in a non-oxidation gas atmosphere, and wherein the aluminum alloy member includes 0.01-0.5 mass% of each of one or more kinds of metal elements having a melting point of 350°C or lower and a standard free energy of formation ($\Delta G°$) of an oxide of higher than -150 (kg cal/gr mol $O_2$) at 600°C.

[Citation List]

[Patent Literature]

[Patent Literature 1]
Japanese Unexamined Patent Application, First Publication No. 2010-247209
[Patent Literature 2]
Japanese Unexamined Patent Application, First Publication No. 2015-58466
[Patent Literature 3]
JP 2019 013981 A

[Summary of Invention]

[Technical Problem]

However, in the case of a joint shape having an open portion that is easily affected by the atmosphere, a MgO film that is a stable oxide film which is not easily decomposed tends to grow during brazing and bonding is significantly hindered. For this reason, there is a strong desire for brazing in which a stable joint state can be obtained even in a joint having an open portion.

An object of the present invention is to provide an aluminum brazing sheet and a method for flux-free brazing of aluminum members in which a stable joint state can be obtained even in a joint having an open portion.

[Solution to Problem]

The solution to the objection of the present invention is defined in the appended claims.

[Advantageous Effects of Invention]

According to the present invention, there is an effect in which satisfactory brazing can be performed in a non-oxidizing atmosphere without using a flux and without decompression and it is possible to obtain a heat exchanger in which aluminum members are satisfactorily brazed to each other.

[Brief Description of Drawings]

Fig. 1 is a diagram showing a brazing sheet for flux-free brazing according to an embodiment of the present invention.
Fig. 2 is a perspective view showing an aluminum heat exchanger for an automotive according to the embodiment of the present invention.
Fig. 3A is a diagram showing a brazing evaluation model in an example of the present invention.
Fig. 3B is a diagram showing a width evaluation position of a joint portion in the example of the present invention.

[Description of Invention]

The present invention will be described below with reference to the accompanying drawings. In an aluminum brazing sheet 1 in the embodiment, an aluminum alloy brazing material 3 is located on the outermost surface layer of at least one side of an aluminum alloy core material 2.

As an aluminum alloy for a brazing material located on the outermost surface layer, the aluminum alloy contains, by mass%, 0.01% to 2.0% of Mg, 1.5% to 14% of Si, 0.005% to 1.5% of Sn, and if desired, 0.1% to 9.0% of Zn, and contains an Al-Si-Mg-Sn brazing material including Al and the inevitable impurities used as the balance. It is necessary to prepare a composition in which a Ca content in the inevitable impurities is restricted to 100 ppm or less by a mass ppm and Sr is regulated to 0.02% or less by mass%. In addition, it is preferable that with regard to an atomic ratio between Mg, and Sn, Mg/Sn be 2 or more to prevent the generation of Sn particles.

In the Al-Si-Mg-Sn brazing material, there are more than 10 Mg-Sn-based compounds contained in the Al-Si-Mg-Sn brazing material and having a diameter of 0.01 $\mu$m or more and less than 5.0 $\mu$m as a circle equivalent diameter per 10000 $\mu$m$^2$ field of view when observed in a surface-layer surface direction before brazing. Furthermore, it is preferable that there be less than 5 Sn particles contained in the Al-Si-Mg-Sn brazing material and having a diameter of 5.0 $\mu$m or more as a circle equivalent diameter per 10000 $\mu$m$^2$ field of view when observed in a surface-layer surface direction before brazing.

The present invention will be described.

(Brazing material alloy)
Mg: 0.01% to 2.0%

Mg forms Mg$_2$Si by forming a compound of Mg and Si and increases a material strength. Furthermore, since Mg is concentrated on a surface of a material and reduces and decomposes an Al oxide film, Mg is contained. In order to achieve the above action sufficiently, it is necessary to include Mg of a lower limit or more. On the other hand, if an amount of Mg exceeds an upper limit, the effect becomes saturated and the material becomes hard and brittle, which makes it difficult to manufacture the material. For the above reasons, the Mg content is set within the above range. For the same reason, it is preferable to set the lower limit to 0.05% and the upper limit to 1.0%. It is more preferable that the Mg content be 0.5% or more.

Si: 1.5 to 14

Si is contained because it lowers a melting point of a brazing material and produces a molten brazing material required for joining at a temperature equal to or higher than the eutectic temperature at the time of raising a brazing temperature. In order to achieve the above action sufficiently, it is necessary to contain a lower limit or more. On the other hand, if an amount of Si exceeds an upper limit, the effect is saturated and the material becomes hard and brittle, which makes it difficult to manufacture the material. For the above reasons, the Si content is set within the above range. For the same reason, it is preferable to set the lower limit to 3.0% and the upper limit to 12.0%. It is more preferable that the Si content be 7.5% or more.

Sn: 0.005% to 1.5%

Sn is concentrated and present on the surface. On a surface of a material having a low melting point element concentrated thereon, an oxide film becomes fragile and easily corrodes. Thus, the brazing property is improved so that Sn is contained. In order to achieve the above action sufficiently, it is necessary to contain a lower limit or more. On the other hand, if an amount of Sn exceeds an upper limit, not only does the effect become saturated but also Sn oxides are likely to be formed on a surface of the material so that the bonding is hindered. For the above reasons, the Sn content is set within the above range. For the same reason, it is preferable to set the lower limit to 0.05% and the upper limit to 1.2%. It is more preferable that the Sn content be 0.2% or more.

More than 10 Mg-Sn-based compounds per Mg-Sn-based compound particle size (diameter equivalent to circle of 0.01 or more and less than 5.0 $\mu$m): 10000 $\mu$m$^2$ field of view

When the compound is melted in a brazing temperature raising process by dispersing a fine Mg-Sn-based compound, Sn is easily concentrated uniformly on a surface of the material and the growth of a dense oxide film is prevented. For this reason, the number of diameters equivalent to a circle is prescribed. If the number is 10 or less, the above action cannot be sufficiently achieved. Furthermore, the Mg-Sn-based compound particles having a size of less than 0.01 $\mu$m are too fine to achieve the above action. On the other hand, in the case of Mg-Sn-based compound particles having a size of 5.0 $\mu$m or more, the generation of coarse compounds reduces the generation of fine Mg-Sn-based compounds having a size of less than 5.0 $\mu$m so that the effect of preventing the growth of the oxide film is reduced. It is more preferable that the number of Mg-Sn compound particles on a surface of the brazing material be 15 or more.

The number of Mg-Sn compound particles on the surface of the brazing material can determined by mirror-treating a surface of the brazing material of the prepared material with 0.1 $\mu$m abrasive grains and performing fully automatic particle analysis using an electron probe micro-analyzer (EPMA). Furthermore, regarding the measurement of fine compound particles of 1 $\mu$m or less, a thin film may be prepared from the surface of a cut-out brazing material layer through mechanical polishing and electrolytic polishing, and observed with a transmission electron microscope (TEM), and the number of particles may be measured.

As a means for finely and densely distributing a Mg-Sn compound, the adjustment can be performed by appropriately combining performing casting at a high cooling rate from a place in which a molten metal temperature is high at the time of casting, providing a large total rolling reduction amount of a certain level or more at the time of hot rolling, providing a long rolling time in a high temperature range, decreasing a hot-rolled finish temperature of a certain level or more and then increasing a cooling rate, and the like.

Less than 5 Sn particles having a Sn single particle size (diameter equivalent to circle) of a diameter of 5.0 $\mu$m or more per 10000 $\mu$m$^2$ field of view

If Sn particles are present in the brazing material, the Sn particles melt from around 23 1°C that is the melting point of Sn in the brazing temperature raising process and a concentration thereof increases on a surface of the material. Here, since the melting is performed in a low temperature range of the brazing temperature raising process, bonding is hindered because Sn which is oxidized and deposited on a surface of the material until the brazing material melts and re-oxidation which is likely to proceed due to an oxide film which becomes unstable at an early stage and achieving a good joint state is difficult. Furthermore, since Sn is consumed due to oxidation, the effect of reducing a surface tension of the molten brazing material is reduced. At this time, it is possible to prevent these problems by preparing the material so that hardly any Sn particles are present in the brazing material before brazing. For this reason, it is preferable to regulate the Sn particles having a circle equivalent diameter of 5.0 $\mu$m or more.

To be specific, in the observation in the surface-layer surface direction before brazing, when the number of Sn particles having a circle equivalent diameter and having a diameter of 5.0 $\mu$m or more contained in the Al-Si-Mg-Sn brazing material is reduced to less than 5 per 10000 $\mu$m$^2$ field of view, there is almost no consumption of Sn due to oxidation or the like and the effect of improving the brazing property by adding Sn is increased. It is preferable that the number of Sn particles on a surface of the brazing material be 4 or less.

The number of Sn particles on a surface of the brazing material can be obtained by mirror-treating a surface of the brazing material of the prepared material with 0.1 $\mu$m abrasive grains and performing fully automatic particle analysis using an electron probe micro-analyzer (EPMA).

As a means for preventing the generation of Sn particles, the adjustment can be performed by appropriately combining a blending ratio of Mg and Sn in an alloy, a molten metal temperature and a cooling rate at the time of casting, and the homogenization treatment conditions. When the molten metal temperature at the time of casting decreases and when the cooling rate at the time of casting decreases, the number of Sn particles tends to increase. In addition, when the homogenization treatment conditions have a lower temperature and a shorter time, similarly, the number of Sn particles tends to increase.

Atomic weight ratio of Mg and Sn (Mg/Sn)$\geq$2

Since an atomic weight of Mg increases relative to an atomic weight of Sn, the generation of the Sn particles in the brazing material is prevented. In addition, Since the brazing property is improved, the atomic weight ratio is set as desired. For the same reason, it is more preferable to set the atomic weight ratio to 3 or more.

Amount of Ca in impurities: 100 ppm or less

Although about several hundred ppm or less of Ca is usually contained as the inevitable impurities, the Ca content is 100 ppm or less. Since Ca forms a high-melting point compound of Ca and Sn, the action of Sn is reduced, and the brazing property becomes insufficient, it is necessary to determine an upper limit. For the same reason, it is more preferable to further reduce the Ca content to 10 ppm or less.

Amount of Sr in impurities: 0.02% or less

When an amount of Sr is regulated in the brazing material, miniaturization of eutectic Si particles at the time of casting is promoted. Thus, when forming an aluminum clad material having the brazing material located on a surface thereof, mold wear or the like due to Si particles is prevented. For this reason, it is preferable to regulate the amount of Sr in impurities in accordance with the above prescriptions. For the same reason, it is more preferable to reduce the amount of Sr to 0.01% or less.

Amount of Zn: 0.1% to 9.0%

Zn may be contained as desired because a sacrificial anticorrosion effect can be obtained by lowering a potential of the material. If an amount of Zn is less than a lower limit, the above effect cannot be sufficiently obtained. On the other hand, if the amount of Zn exceeds an upper limit, a potential becomes too low and a rate of corrosion and consumption of a sacrificial material increases. In addition, when Zn is contained, the Zn content is set in the above range because the pitting corrosion resistance of the clad material is lowered due to the early disappearance of the sacrificial material. For the same reason, it is preferable to set the lower limit to 0.2% and the upper limit to 0.8%.

The aluminum alloy brazing material 3 in the embodiment is manufactured as follows. A composition of the embodiment of the present invention is prepared and an aluminum alloy is melted. The melting can be performed by a semi-continuous casting method. A fine Mg-Sn compound is dispersed before brazing in the embodiment of the present invention. Thus, Mg and Sn are supersaturated and solid-dissolved in an ingot by performing quenching from a high molten metal temperature at the time of casting the brazing material. To be specific, when the molten metal temperature is set to 700°C or higher, the solid solubility of Mg and Sn can be increased.

The obtained aluminum alloy ingot is homogenized under predetermined conditions, coarse Mg-Sn compounds are deposited when the homogenization treatment temperature is low, and obtaining a distribution state of the Mg-Sn compound of the present invention before brazing is difficult. Thus, it is preferable that the treatment temperature be 400°C or higher for 1 to 10 hours or longer.

The aluminum alloy for a core material is prepared using a composition containing, by mass%, one or more of 0.05% to 1.2% of Si, 0.01% to 2.0% of Mg, 0.1% to 2.5% of Mn, 0.01% to 2.5% of Cu, 0.05% to 1.0% of Fe, 0.01% to 0.3% of Zr, 0.01% to 0.3% of Ti, 0.01% to 0.5% of Cr, 0.005% to 1.5% of Bi, and 0.1% to 9.0% of Zn, and a balance Al containing inevitable impurities.

Preferably, the aluminum alloy for a core material is prepared using a composition containing one or more of 0.05% to 1.2% of Si, 0.01% to 1.0% of Mg, 0.7% to 2.0% of Mn, 0.01% to 1.5% of Cu, 0.05% to 0.5% of Fe, 0.01% to 0.3% of Zr, 0.01% to 0.3% of Ti, 0.01% to 0.5% of Cr, 0.005% to 0.3% of Bi, and 0.1% to 9.0% of Zn, and a balance Al containing inevitable impurities or a composition containing one or more of, by mass%, 0.05% to 1.2% of Si, 0.01% to 1.0% of Mg, 0.3% to 2.0% of Mn, 0.01% to 1.5% of Cu, 0.05% to 0.5% of Fe, 0.01% to 0.3% of Zr, 0.01% to 0.3% of Ti, 0.01% to 0.5% of Cr, 0.005% to 1.5% of Bi, and 0.1% to 9.0% of Zn, and a balance Al containing inevitable impurities.

The strength of the material can be significantly increased by finely depositing $Mg_2Si$ or the like. Thus, an alloy having Mg and Si are positively added thereto can be preferably used. In the brazing method using a fluoride-based flux in the related art, it is difficult to apply the brazing method to high-strength Mg-added alloys because the flux reacts with Mg to generate Mg fluoride having a high melting point and inactivates, which reduces the brazing property and consumes Mg due to this reaction. Here, for flux-free brazing, high-strength Mg-added alloys can be used.

An intermediate layer which functions as a brazing material may be provided between the brazing material and the core material.

An aluminum alloy having Zn added thereto may be used as a sacrificial anticorrosion layer and cladded on a surface of a core material having a brazing material 3 not cladded.

Hot rolling and cold rolling are performed on these alloys to obtain a clad material in which a brazing material layer is superposed on one surface or both surfaces of the core material and joined.

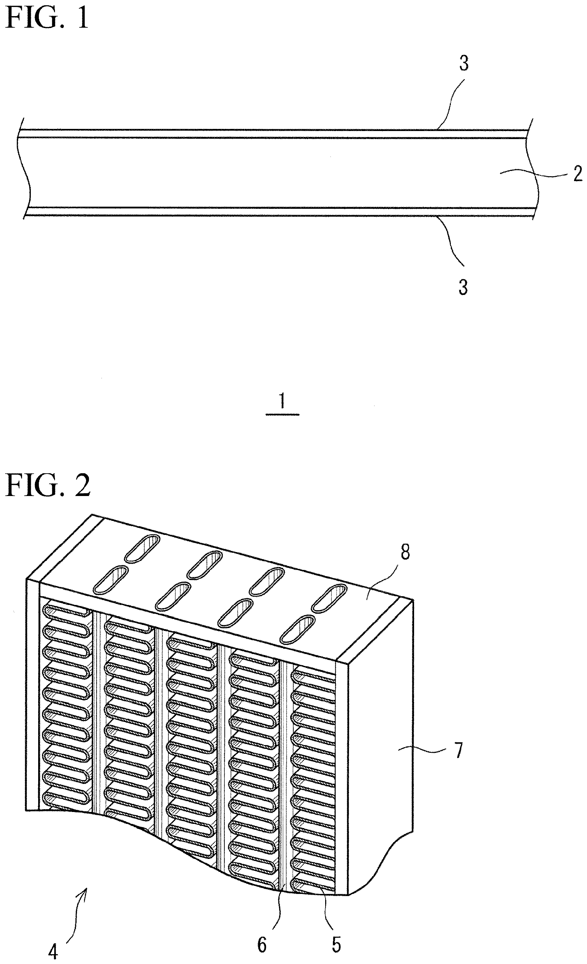

Through the above steps, as shown in Fig. 1, a brazing sheet 1 for a heat exchanger in which the aluminum alloy brazing material 3 is cladded on both sides of the aluminum alloy core material 2 is obtained. The brazing sheet 1 in the embodiment may have a multi-layer structure of at least two or more layers in which an aluminum alloy brazing material 2 and an aluminum alloy core material 2 are superposed.

It is preferable that a total rolling reduction amount at the time of hot rolling be 4.0 or more with a considerable strain. The equivalent strain is determined by the following equation:

$$\varepsilon=(2/\sqrt{3})\ln(t0/t)$$

where ε:equivalent strain,
t0: hot rolling start thickness (slab thickness), and
t: hot-rolled finish thickness.

It is preferable that a rolling time in a high temperature range (350 to 500°C) at the time of hot rolling be 7 min or more. It is preferable that the hot-rolled finish temperature be 250 to 350°C and a cooling rate from a finishing temperature to 200°C be >-20°C/h.

The aluminum alloy core material 2 corresponds to an aluminum alloy member according to the embodiment of the present invention. The brazing material may include an intermediate layer. Furthermore, the brazing material may be located on one side of the core material or the sacrificial material may be located on the other side.

Although the brazing materials on both sides are denoted by the same reference numeral in the embodiment, the composition of the brazing material on each surface may be the same or different in the composition within the scope of the present invention.

The brazing material can have a thickness of 1% to 30% with respect to a total thickness of the brazing sheet 1. Here, a clad ratio is not particularly limited in the present invention.

The brazing sheet 1 can be used as a tube, a header, a tank, an outer fin, an inner fin, or the like of a heat exchanger.

As a brazing target member (member to be brazed), for example, an aluminum alloy containing, by mass%, 0.1% to 0.8% of Mg, 0.1% to 1.2% of Si, and a balance Al containing inevitable impurities is prepared and processed into an appropriate shape. The brazing target member corresponds to the aluminum member of the present invention. A composition of the brazing target member is not particularly limited in present invention and an appropriate composition can be used.

In the brazing sheet 1 described above, it is preferable that the brazing material layer 3 be located on the outermost surface, an average film thickness of a surface oxide film be 15 nm or less, and an average film thickness of a MgO film in the surface oxide film be adjusted to 2 nm or less.

It is preferable that the average film thickness of the surface oxide film of the brazing target member be adjusted to 15 nm or less and the MgO film thickness in the film be adjusted to 2 nm or less at least on a joint surface.

The surface oxide film can be adjusted using a temperature and time during various heat treatments such as homogenization after casting, soaking heat before hot rolling, annealing after cold rolling, and the like.

The brazing sheet 1 and the brazing target member are flux-free and are disposed so that the brazing material layer 3 is disposed between the aluminum alloy core material 2 and the brazing target member. These are assembled to form an aluminum alloy assembly for brazing.

The assembly is loaded into a heating furnace having a non-oxidizing atmosphere under normal pressure. A non-oxidizing gas can be composed of nitrogen gas, an inert gas such as argon, a reducing gas such as hydrogen or ammonia, or a mixed gas thereof.

Although the pressure in the atmosphere in a brazing furnace is basically normal pressure, for example, a medium-low vacuum of about 100 kPa to 0.1 Pa in a temperature range before melting the brazing material may be used to improve the gas replacement efficiency inside a product or the positive pressure may be about 5 to 100 Pa higher than the atmospheric pressure to prevent the mixing of the outside air (atmosphere) into the furnace.

The heating furnace does not need to have a closed space and may be a tunnel type having an inlet and an outlet for a brazing material. Even in such a heating furnace, the non-oxidizing property is maintained by continuously blowing the inert gas into the furnace.

As the non-oxidizing atmosphere, it is preferable that a volume ratio of an oxygen concentration be 300 ppm or less.

Under the above atmosphere, for example, heating is performed at a heating rate of 10 to 200°C/min and brazing joining is performed under heat treatment conditions in which an arrival temperature (heating temperature) of an assembled body is 559 to 630°C.

Under brazing conditions, when the heating rate increases, a brazing time decreases. Thus, the growth of an oxide film on a surface of the material is prevented and the brazing property is improved. Although brazing is possible if the arrival temperature is at least a solidus line temperature or higher of the brazing material, when the arrival temperature approaches a liquidus line temperature, an amount of flowing brazing material increases and it becomes easy to obtain a good joint state in a joint having an open portion. Here, if the temperature is too high, brazing erosion is likely to proceed and the structural dimensional accuracy of the assembled body after brazing is lowered, which is not preferable. The heating rate is more preferably 50 to 200°C/min and the arrival temperature of the assembled body is more preferably 580 to 620°C.

Fig. 2 shows an aluminum heat exchanger 4 for an automotive 4 in which fins 5 are formed using the brazing sheet 1 described above and aluminum alloy tubes 6 are used as brazing target materials. The fins 5 and the tubes 6 are incorporated with reinforcing materials 7 and a header plate 8 to obtain the aluminum heat exchanger 4 for an automotive through flux-free brazing.

[Examples]

Example Nos. 1 to 26 of the present invention and Comparative Example Nos. 1 to 7 will be described below.

Aluminum materials obtained by cladding brazing materials having the compositions shown in Tables 1 and 2 (balance Al containing inevitable impurities) and a core material of JIS A3003 were prepared.

As the aluminum clad material, various composition brazing materials were used with a clad ratio of 5% and finished to a thickness of 0.25 mm which was tempered to be equivalent to H14. Furthermore, as a brazing target member, corrugated fins 11 made of a JIS A3005 alloy and an H14 aluminum bare material (thickness of 0.1 mm) were prepared.

(Measurement of number of Mg-Sn compounds and Sn particles on surface of brazing material)

The number of Mg-Sn compounds and Sn particles on a surface of the brazing material was obtained by mirror-treating the surface of the brazing material of the prepared material with 0.1 $\mu$m abrasive grains and measuring the number of each sample in an area of 10000 $\mu m^2$ (corresponding to an observation field of 100 $\mu$m×100 $\mu$m) through fully automated particle analysis using an electron probe micro-analyzer (EPMA).

The results are shown in Tables 1 and 2.

(Brazing property evaluation)

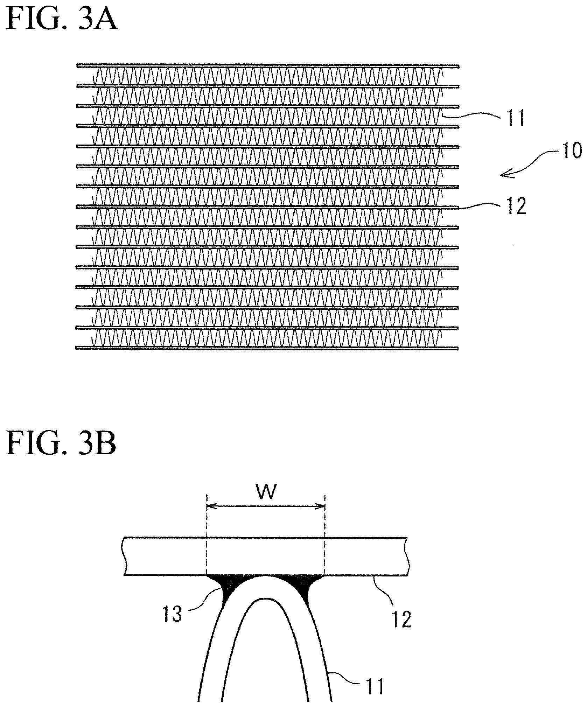

Flat electric sewing tubes 12 having a width of 20 mm were manufactured using the aluminum clad material described above, and as shown in Fig. 3(A), the flat electric sewing tubes 12 were combined with the corrugated fins 11 made of a JIS A3003 bare material to form a core shape. A core size was a core with 15 stages of tubes and a length of 300 mm.

A core was heated to 560 to 600°C in a brazing furnace in a nitrogen atmosphere (oxygen content of 50 ppm) and a joining rate after brazing was obtained by the following expression to evaluate a brazing state:

$$\text{Fin joining rate} = (\text{total brazing length of fins and tubes/total contact length of fins and tubes}) \times 100.$$

A total contact length of the fins and the tubes was a total length in which the fins were in contact with the tubes when the fins and the tubes were assembled. A total brazing length of the fins and the tubes was a total length of joints of the fins and the tubes when the assembled fins and tubes were brazed:

Determination criteria for fin joining rate: A: 98% or more, B: 90% or more and less than 98%, C: 80% or more and less than 90%, and D: less than 80%.

The results are shown in Tables 1 and 2.

(Joint portion width evaluation)

In the brazing joining state, in order to confirm not only the above-described joining rate but also the improvement of the fillet forming ability that is an object of the present invention, a joint portion width W (fillet length) as shown in Fig. 3B was measured at 20 points in each sample and the superiority or inferiority was evaluated based on an average value:

Fillet length after brazing: A: 1.0 mm or more, B: 0.8 mm or more and less than 1.0 mm, C: 0.6 mm or more and less than 0.8 mm, and D: less than 0.6 mm.

The results are shown in Tables 1 and 2.

[Table 1]

| Sample material No. | | Brazing material additive element (wt%) | | | | | | Atomic weight ratio of Mg/Sn | Mg-Sn compound less than 0.01 to 5.0 μm (number/ 10000 μm²) | Sn particles 5.0 to 50 μm (particles/10000 μm²) | Brazing property (fin joing rate) | Joint portion width (fillet length) |
|---|---|---|---|---|---|---|---|---|---|---|---|---|
| | | Si | Mg | Sn | Ca | Sr | Zn | | | | | |
| Example | 1 | 1.5 | 0.5 | 0.5 | 0.01 | 0.01 | - | 4.9 | 29 | 1 | C | C |
| | 2 | 3.0 | 0.5 | 0.5 | 0.01 | 0.01 | - | 4.9 | 24 | 1 | B | C |
| | 3 | 7.5 | 0.5 | 0.5 | 0.01 | 0.01 | - | 4.9 | 34 | 1 | A | B |
| | 4 | 10.0 | 0.5 | 0.5 | 0.01 | 0.01 | - | 4.9 | 42 | 1 | A | A |
| | 5 | 14.0 | 0.5 | 0.5 | 0.01 | 0.01 | - | 4.9 | 34 | 1 | A | A |
| | 6 | 10 | 0.01 | 0.5 | 0.01 | 0.01 | - | 0.1 | 24 | 1 | C | B |
| | 7 | 10 | 0.01 | 0.2 | 0.01 | 0.01 | - | 0.2 | 18 | 1 | C | B |
| | 8 | 10 | 0.1 | 0.5 | 0.01 | 0.01 | - | 1.0 | 29 | 1 | B | B |
| | 9 | 10 | 1.0 | 0.5 | 0.01 | 0.01 | - | 9.8 | 38 | 1 | A | A |
| | 10 | 10 | 1.5 | 0.5 | 0.01 | 0.01 | - | 14.6 | 23 | 1 | A | A |
| | 11 | 10 | 2.0 | 0.5 | 0.01 | 0.01 | - | 19.5 | 15 | 1 | A | A |
| | 12 | 10 | 0.5 | 0.005 | 0.01 | 0.01 | - | 488.3 | 25 | 1 | C | B |
| | 13 | 10 | 0.5 | 0.05 | 0.01 | 0.01 | - | 48.8 | 38 | 1 | B | B |
| | 14 | 10 | 0.5 | 0.2 | 0.01 | 0.01 | - | 12.2 | 21 | 1 | A | A |
| | 15 | 10 | 0.5 | 1.0 | 0.01 | 0.01 | - | 2.4 | 20 | 1 | A | A |
| | 16 | 10 | 0.5 | 1.5 | 0.01 | 0.01 | - | 1.6 | 30 | 1 | B | B |
| | 17 | 10 | 0.5 | 0.2 | 0.05 | 0.01 | - | 12.2 | 37 | 1 | C | B |
| | 18 | 10 | 0.5 | 0.2 | 0.01 | 0.05 | - | 12.2 | 34 | 1 | C | B |
| | 19 | 10 | 0.5 | 0.2 | 0.01 | 0.01 | - | 12.2 | 46 | 1 | A | A |
| | 20 | 10 | 0.5 | 0.2 | 0.01 | 0.01 | 0.1 | 12.2 | 17 | 1 | A | A |
| | 21 | 10 | 0.5 | 0.2 | 0.01 | 0.01 | 0.5 | 12.2 | 35 | 1 | A | A |
| | 22 | 10 | 0.5 | 0.2 | 0.01 | 0.01 | 5 | 12.2 | 25 | 1 | A | A |
| | 23 | 10 | 0.5 | 0.2 | 0.01 | 0.01 | 9 | 12.2 | 46 | 1 | A | A |
| | 24 | 10 | 0.5 | 0.2 | 0.01 | 0.01 | 10 | 12.2 | 27 | 1 | B | B |
| | 25 | 10 | 0.5 | 0.2 | 0.01 | 0.01 | - | 12.2 | 31 | 4 | A | A |
| | 26 | 10 | 0.5 | 0.2 | 0.01 | 0.01 | - | 12.2 | 33 | 5 | B | B |

[Table 2]

| Sample material No. | | Brazing material additive element (wt%) | | | | | | Atomic weight ratio of Mg/Sn | Mg-Sn compound less than 0.01 to 5.0 $\mu$m (number/10000 $\mu$m$^2$) | Sn particles 5.0 to 50 $\mu$m (particles/ 10000 $\mu$m$^2$) | Brazing property (fin joing rate) | Joint portion width (fillet length) |
|---|---|---|---|---|---|---|---|---|---|---|---|---|
| | | Si | Mg | Sn | Ca | Sr | Zn | | | | | |
| Comparative example | 1 | 1.4 | 0.5 | 0.5 | 0.01 | 0.01 | - | 4.9 | 46 | 1 | D | D |
| | 2 | 15 | 0.5 | 0.5 | 0.01 | 0.01 | - | 4.9 | 44 | 1 | Sample preparation is impossible | |
| | 3 | 10 | 0.0001 | 0.5 | 0.01 | 0.01 | - | 0.0 | 33 | 1 | D | D |
| | 4 | 10 | 2.5 | 0.5 | 0.01 | 0.01 | - | 24.4 | 16 | 1 | Sample preparation is impossible | |
| | 5 | 10 | 0.05 | 0.001 | 0.01 | 0.01 | - | 244.1 | 31 | 1 | D | D |
| | 6 | 10 | 0.5 | 1.7 | 0.01 | 0.01 | - | 1.4 | 19 | 1 | D | D |
| | 7 | 10 | 2.0 | 1.5 | 0.01 | 0.01 | - | 6.5 | 9 | 4 | C | D |

In Comparative Examples 1 to 6, since the contents of brazing material additive elements were out of the range of the present invention, the brazing property was low and the joint portion width was insufficient. In Comparative Examples 2 and 4, the materials could not be prepared.

In Comparative Example 7, when observing the surface layer surface direction before brazing, since the number of Mg-Sn compounds having a circle equivalent diameter of 0.01 $\mu$m or more and less than 5.0 $\mu$m was less than 10 per 10000 $\mu$m$^2$ field of view, the brazing property was low and the joint portion width was insufficient.

On the other hand, in Examples 1 to 26, the excellent brazing property was provided and a sufficient joint portion width was formed.

From the foregoing description, it was confirmed that, according to the examples of the present invention, satisfactory brazing can be performed in a non-oxidizing atmosphere without using a flux and without decompression.

Although the present invention has been described above on the basis of the above-described embodiments and examples, the technical scope of the present invention is not limited to the details of the above-described embodiments and examples and appropriate modifications can be provided to the embodiments and examples as long as they do not deviate from the scope of the appended claims.

[Industrial Applicability]

According to the present invention, there is an effect in which excellent brazing can be performed in a non-oxidizing atmosphere without using a flux and without decompression and it is possible to obtain a heat exchanger in which aluminum members are satisfactorily brazed to each other.

[Reference Signs List]

1 Brazing sheet (aluminum brazing sheet)
2 Aluminum alloy core material
3 Aluminum alloy brazing material (brazing material layer)
4 Aluminum heat exchanger for automotive
5 Fin
6 Tube
8 Header plate
11 Corrugated fin

Claims

1. An aluminum brazing sheet having a multi-layer structure of at least two layers or more, an aluminum alloy brazing material being located on an outermost surface by being cladded on one surface or both surfaces of a core material, and the aluminum brazing sheet being applied to brazing in which the aluminum brazing sheet is bonded to a member to be brazed made of aluminum or an aluminum alloy without using a flux in a non-oxidizing atmosphere without decompression, wherein

the brazing material is made of an Al-Si-Mg-Sn brazing material consisting of, by mass%, 0.01% to 2.0 % of Mg, 1.5% to 14% of Si, 0.005% to 1.5% of Sn, optionally 0.1% to 9.0% of Zn, and a balance of Al and inevitable impurities, a Ca content in the inevitable impurities is 100 mass ppm or less, and a Sr content in the inevitable impurities is 0.02% or less,
the core material has a composition consisting of, by mass%,
one or more of

0.05% to 1.2% of Si,
0.01% to 2.0% of Mg,
0.1% to 2.5% of Mn,
0.01% to 2.5% of Cu,
0.05% to 1.0% of Fe,
0.01% to 0.3% of Zr,
0.01% to 0.3% of Ti,
0.01% to 0.5% of Cr,

0.005% to 1.5% of Bi, and
0.1% to 9.0% of Zn; and

a balance of Al and inevitable impurities,
in observation in a surface direction before brazing, there are more than 10 Mg-Sn compounds with a circle equivalent diameter of 0.01 $\mu$m or more and less than 5.0 $\mu$m in the Al-Si-Mg-Sn brazing material per 10000 $\mu$m$^2$ field of view, and
the Mg-Sn compounds are measured in accordance with the description.

2. The aluminum brazing sheet according to claim 1, wherein

in observation in a surface direction before brazing, there are less than 5 Sn particles with a circle equivalent diameter of 5.0 $\mu$m or more in the Al-Si-Mg-Sn brazing material per 10000 $\mu$m$^2$ field of view, and
the Sn particles are measured in accordance with the description.

3. The aluminum brazing sheet according to claim 1 or 2, wherein an atomic ratio of Mg to Sn in the Al-Si-Mg-Sn brazing material, Mg/Sn, is 2 or more.

4. The aluminum brazing sheet according to any one of claims 1 to 3, wherein
the core material has a composition consisting of, by mass%,

0.05% to 1.2% of Si;
0.01% to 2.0% of Mg;
one or more of

0.1% to 2.5% of Mn,
0.01% to 2.5% of Cu,
0.05% to 1.0% of Fe,
0.01% to 0.3% of Zr,
0.01% to 0.3% of Ti,
0.01% to 0.5% of Cr,
0.005% to 1.5% of Bi, and
0.1% to 9.0% of Zn; and

a balance of Al and inevitable impurities.

5. A method of flux-free brazing of aluminum members, the method comprising the step of performing bonding between aluminum members using the aluminum brazing sheet according to any one of claims 1 to 4 without using a flux in a non-oxidizing gas atmosphere without decompression with an oxygen concentration of 100 ppm or less.

6. The method of flux-free brazing of aluminum members according to claim 5, wherein the bonding is performed at a heating temperature of 559°C to 630°C.

**Patentansprüche**

1. Aluminiumhartlotblech mit einer Mehrschichtstruktur aus mindestens zwei Schichten oder mehr, wobei sich ein Aluminiumlegierungshartlötmaterial auf einer äußersten Oberfläche befindet, in dem es auf einer Oberfläche oder beiden Oberflächen eines Kernmaterials plattiert ist, und wobei das Aluminiumhartlotblech zum Hartlöten verwendet wird, wobei das Aluminiumhartlotblech mit einem zu lötenden Element aus Aluminium oder einer Aluminiumlegierung ohne Verwendung eines Flussmittels in einer nichtoxidierenden Atmosphäre ohne Dekompression verbunden wird, wobei

das Hartlötmaterial aus einem Al-Si-Mg-Sn-Hartlötmaterial ist, das, in Masse-%, aus 0,01 % bis 2,0 % Mg, 1,5 % bis 14 % Si, 0,005 % bis 1,5 % Sn, optional 0,1 % bis 9,0 % Zn und einem Rest aus Al und unvermeidlichen Verunreinigungen besteht, ein Ca-Gehalt in den unvermeidlichen Verunreinigungen 100 Masse-ppm oder weniger beträgt und ein Sr-Gehalt in den unvermeidlichen Verunreinigungen 0,02 % oder weniger beträgt,
das Kernmaterial einer Zusammensetzung aufweist, bestehend, in Masse-%, aus

einem oder mehreren von

0,05 % bis 1,2 % Si,
0,01 % bis 2,0 % Mg,
0,1 % bis 2,5 % Mn,
0,01 % bis 2,5 % Cu,
0,05 % bis 1,0 % Fe,
0,01 % bis 0,3 % Zr,
0,01 % bis 0,3 % Ti,
0,01 % bis 0,5 % Cr,
0,005 % bis 1,5 % Bi und
0,1 % bis 9,0 % Zn und

einem Rest aus Al und unvermeidlichen Verunreinigungen,
bei einer Betrachtung in einer Oberflächenrichtung vor dem Hartlöten mehr als 10 Mg-Sn-Verbindungen mit einem kreisäquivalenten Durchmesser von 0,01 $\mu$m oder mehr und weniger als 5,0 $\mu$m in dem Al-Si-Mg-Sn-Hartlötmaterial pro 10.000 $\mu$m$^2$ Sichtfeld vorliegen und
die Mg-Sn-Verbindungen gemäß der Beschreibung gemessen werden.

2. Aluminiumhartlotblech gemäß Anspruch 1, wobei

bei einer Betrachtung in einer Oberflächenrichtung vor dem Hartlöten weniger als 5 Sn-Partikel mit einem kreisäquivalenten Durchmesser von 5,0 $\mu$m oder mehr in dem Al-Si-Mg-Sn-Hartlötmaterial pro 10.000 $\mu$m$^2$ Sichtfeld vorliegen und
die Sn-Partikel gemäß der Beschreibung gemessen werden.

3. Aluminiumhartlotblech gemäß Anspruch 1 oder 2, wobei ein Atomverhältnis von Mg zu Sn in dem Al-Si-Mg-Sn-Hartlötmaterial, Mg/Sn, 2 oder mehr beträgt.

4. Aluminiumhartlotblech gemäß einem der Ansprüche 1 bis 3, wobei das Kernmaterial eine Zusammensetzung aufweist, bestehend, in Masse-%, aus

0,05 % bis 1,2 % Si,
0,01 % bis 2,0 % Mg,
einem oder mehreren von

0,1 % bis 2,5 % Mn,
0,01 % bis 2,5 % Cu,
0,05 % bis 1,0 % Fe,
0,01 % bis 0,3 % Zr,
0,01 % bis 0,3 % Ti,
0,01 % bis 0,5 % Cr,
0,005 % bis 1,5 % Bi und
0,1 % bis 9,0 % Zn und

einem Rest aus Al und unvermeidlichen Verunreinigungen.

5. Verfahren zum flussmittelfreien Hartlöten von Aluminiumelementen, wobei das Verfahren den Schritt zur Durchführung einer Verbindung zwischen Aluminiumelementen unter Verwendung des Aluminiumhartlotblechs gemäß einem der Ansprüche 1 bis 4 ohne Verwendung eines Flussmittels in einer nichtoxidierenden Atmosphäre ohne Dekompression mit einer Sauerstoffkonzentration von 100 ppm oder weniger umfasst.

6. Verfahren zum flussmittelfreien Hartlöten von Aluminiumelementen gemäß Anspruch 5, wobei die Verbindung bei einer Erwärmungstemperatur von 559°C bis 630°C durchgeführt wird.

## Revendications

1. Feuille de brasage d'aluminium présentant une structure multicouche d'au moins deux couches ou plus, un matériau de brasage en alliage d'aluminium étant situé sur une surface la plus externe en étant plaqué sur une surface ou les deux surfaces d'un matériau central, et la feuille de brasage d'aluminium étant appliquée à un brasage dans lequel la feuille de brasage d'aluminium est liée à un élément à braser fait d'aluminium ou d'un alliage d'aluminium sans utiliser de flux dans une atmosphère non oxydante sans décompression, dans laquelle

   le matériau de brasage est fait d'un matériau de brasage en Al-Si-Mg-Sn consistant en, en % en masse, 0,01 % à 2,0 % de Mg, 1,5 % à 14 % de Si, 0,005 % à 1,5 % de Sn, facultativement 0,1 % à 9,0 % de Zn, le reste étant Al et des impuretés inévitables, une teneur en Ca dans les impuretés inévitables est de 100 ppm en masse ou moins, et une teneur en Sr dans les impuretés inévitables est de 0,02 % ou moins,
   le matériau central présente une composition consistant en, en % en masse,
   un ou plusieurs parmi

   0,05 % à 1,2 % de Si,
   0,01 % à 2,0 % de Mg,
   0,1 % à 2,5 % de Mn,
   0,01 % à 2,5 % de Cu,
   0,05 % à 1,0 % de Fe,
   0,01 % à 0,3 % de Zr,
   0,01 % à 0,3 % de Ti,
   0,01 % à 0,5 % de Cr,
   0,005 % à 1,5 % de Bi, et
   0,1 % à 9,0 % de Zn ; et

   le reste étant Al et des impuretés inévitables,
   lors d'une observation dans une direction de surface avant brasage, il y a plus de 10 composés de Mg-Sn avec un diamètre équivalent à un cercle de 0,01 $\mu$m ou plus et moins de 5,0 $\mu$m dans le matériau de brasage en Al-Si-Mg-Sn pour un champ de vision de 10 000 $\mu$m$^2$, et
   les composés de Mg-Sn sont mesurés conformément à la description.

2. Feuille de brasage d'aluminium selon la revendication 1, dans laquelle

   lors d'une observation dans une direction de surface avant brasage, il y a moins de 5 particules de Sn avec un diamètre équivalent à un cercle de 5,0 $\mu$m ou plus dans le matériau de brasage en Al-Si-Mg-Sn pour un champ de vision de 10 000 $\mu$m$^2$, et
   les particules de Sn sont mesurées conformément à la description.

3. Feuille de brasage d'aluminium selon la revendication 1 ou la revendication 2, dans laquelle un rapport atomique de Mg sur Sn dans le matériau de brasage Al-Si-Mg-Sn, Mg/Sn, est de 2 ou plus.

4. Feuille de brasage d'aluminium selon l'une quelconque des revendications 1 à 3, dans laquelle le matériau central présente une composition consistant en, en % en masse,

   0,05 % à 1,2 % de Si ;
   0,01 % à 2,0 % de Mg ;
   un ou plusieurs parmi

   0,1 % à 2,5 % de Mn,
   0,01 % à 2,5 % de Cu,
   0,05 % à 1,0 % de Fe,
   0,01 % à 0,3 % de Zr,
   0,01 % à 0,3 % de Ti,
   0,01 % à 0,5 % de Cr,
   0,005 % à 1,5 % de Bi, et
   0,1 % à 9,0 % de Zn ; et

le reste étant Al et des impuretés inévitables.

5. Procédé de brasage sans flux d'éléments en aluminium, le procédé comprenant l'étape consistant à réaliser une liaison entre des éléments en aluminium en utilisant la feuille de brasage d'aluminium selon l'une quelconque des revendications 1 à 4 sans utiliser de flux dans une atmosphère gazeuse non oxydante sans décompression avec une concentration en oxygène de 100 ppm ou moins.

6. Procédé de brasage sans flux d'éléments en aluminium selon la revendication 5, dans lequel la liaison est réalisée à une température de chauffage de 559 °C à 630 °C.

# FIG. 1

3

2

3

1

# FIG. 2

8

7

6  5

4

FIG. 3A

FIG. 3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010247209 A
- JP 2015058466 A
- JP 2019013981 A